(19) Europäisches Patentamt
European Patent Office
Office européen des brevets

(11) **EP 1 342 353 B1**

(12) **EUROPÄISCHE PATENTSCHRIFT**

(45) Veröffentlichungstag und Bekanntmachung des Hinweises auf die Patenterteilung:
**14.03.2007 Patentblatt 2007/11**

(21) Anmeldenummer: **01990545.4**

(22) Anmeldetag: **11.12.2001**

(51) Int Cl.:
*H04L 27/26* (2006.01)     *H04L 25/02* (2006.01)

(86) Internationale Anmeldenummer:
**PCT/EP2001/014556**

(87) Internationale Veröffentlichungsnummer:
**WO 2002/049304 (20.06.2002 Gazette 2002/25)**

(54) **VERFAHREN ZUR SCHÄTZUNG DER KANALEIGENSCHAFTEN IN EINEM KOMMUNIKATIONSSYSTEM**

METHOD FOR ESTIMATING THE CHANNEL PROPERTIES IN A COMMUNICATION SYSTEM

PROCEDE POUR ESTIMER LES CARACTERISTIQUES DE CANAL DANS UN SYSTEME DE COMMUNICATION

(84) Benannte Vertragsstaaten:
**AT BE CH CY DE DK ES FI FR GB GR IE IT LI LU MC NL PT SE TR**

(30) Priorität: **11.12.2000 EP 00127085**

(43) Veröffentlichungstag der Anmeldung:
**10.09.2003 Patentblatt 2003/37**

(73) Patentinhaber: **SIEMENS AKTIENGESELLSCHAFT**
**80333 München (DE)**

(72) Erfinder:
- **BAIER, Paul-Walter**
  **67661 Kaiserslautern (DE)**
- **SKLAVOS, Alexandros**
  **67663 Kaiserslautern (DE)**
- **WEBER, Tobias**
  **67731 Otterbach (DE)**

(56) Entgegenhaltungen:
**EP-A- 0 829 988          EP-A- 0 913 973**
**WO-A-98/09381**

- **MEURER M ET AL: "Joint transmission: advantageous downlink concept for CDMA mobile radio systems using time division duplexing" ELECTRONICS LETTERS, IEE STEVENAGE, GB, Bd. 36, Nr. 10, 11. Mai 2000 (2000-05-11), Seiten 900-901, XP006015228 ISSN: 0013-5194**
- **BAIER P W ET AL: "Joint transmission (JT), an alternative rationale for the downlink of time division CDMA using multi-element transmit antennas" IEEE ISSSTA. IEEE INTERNATIONAL SYMPOSIUM ON SPREAD SPECTRUM TECHNIQUES AND APPLICATIONS, XX, XX, 6. September 2000 (2000-09-06), Seiten 1-5, XP002167882**
- **JONES V K ET AL: "CHANNEL ESTIMATION FOR WIRELESS OFDM SYSTEMS" IEEE GLOBECOM 1998. GLOBECOM '98. THE BRIDGE TO GLOBAL INTEGRATION. SYDNEY, NOV. 8 - 12, 1998, IEEE GLOBAL TELECOMMUNICATIONS CONFERENCE, NEW YORK, NY: IEEE, US, Bd. 2, 1998, Seiten 980-985, XP000825895 ISBN: 0-7803-4985-7**

**Beschreibung**

Verfahren zur Schätzung der Kanaleigenschaften in einem Kommunikationssystem innerhalb seiner Systembandbreite, nach dem Oberbegriff des Anspruchs 1.

In Kommunikationssystemen werden Informationen (beispielsweise Sprache, Bildinformation, Videoinformation, SMS [Short Message Service] oder andere Daten) mit Hilfe von elektromagnetischen Wellen über eine Schnittstelle zwischen sendender und empfangender Station (Basisstation bzw. Teilnehmerstation) übertragen. Insbesondere in Funk-Kommunikationssystemen erfolgt das Abstrahlen der elektromagnetischen Wellen dabei bei Trägerfrequenzen, die in dem für das jeweilige System vorgesehenen Frequenzband liegen. Für das bereits eingeführte GSM-Mobilfunksystem (Global System für Mobile Communication) werden Frequenzen bei 900, 1800 und 1900 MHz genutzt. Für zukünftige Mobilfunksysteme mit CDMA-, TD/CDMA- oder OFDM (Orthogonal Frequency Division Multiplex) Übertragungsverfahren, wie beispielsweise UMTS (Universal Mobile Telecommunication System), Hiperlan, IEEE 802.11a, DVB (Digital Videa Broadcast) oder andere Systeme zukünftiger Generation, sind Frequenzen im Frequenzband bis ca. 6000 MHz vorgesehen.

Speziell bei OFDM Übertragungsverfahren werden die zu übertragende Informationsbits jeweils in Gruppen - sogenannten OFDM-Symbolen - zu vorzugsweise $2^m$ bits zusammengefasst, mit m einer natürlichen Zahl. Durch IFFT (Inverse Fast Fourier Transformation) der OFDM Symbole werden die Informtionsbits jeweils auf orthogonale Unterträger projeziert, so dass die Informationsbits eines OFDM Symbols über den Funkkanal parallel über den Funkkanal übertragen werden. Zur Vermeidung von Symbolinterferenzen wird den OFDM Symbolen ein zyklischer Präfix angefügt, so dass sich die OFDM Symbolzeit aus der effektiven OFDM Symbolzeit, die die Zeit der Nutzinfomationen umfasst, und der Zeit des Präfixes zusammensetzt .

Der Zugriff von Stationen auf das gemeinsame Übertragungsmedium wird bei diesen Funk-Kommunikationssystemen durch Vielfachzugriffsverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA bzw. OFDM), im Codebereich (Code Division Multiple Access, CDMA) oder im Raumbereich (Space Division Multiple Access, SDMA)zwischen den Stationen aufgeteilt werden. Dabei findet häufig (zum Beispiel bei GSM [Global System for Mobile Communications], TETRA [Terestrial Trunked Radio], DECT [Digital European Cordless Telephone], UMTS [Universal Mobile Telecommunication System]) eine Unterteilung des Übertragungsmediums in Frequenz- und/oder Zeitkanäle entsprechend der Funkschnittstelle statt. Dies Kanäle werden allgemein als Übertragungskanäle oder Funkkanäle bezeichnet. Bei dezentral koordinierten Systemen wird anhand von Messungen über die Verwendbarkeit dieser Übertragungskanäle entschieden. Entsprechend der Funkausbreitung, das heißt abhängig von der Funkfelddämpfung, ist auch eine Wiederverwendung dieser Übertragungskanäle in einem entsprechenden Abstand möglich.

Bei der Funkübertragung zwischen einer Sendestation und mindestens einer Empfangsstation eines Funk-Übetragungssystems kommt es nun infolge der Frequenzselektivität der Übertragungskanäle zu Interferenzerscheinungen, die als Intersysmbolinterferenz und Vielfachzugriffsinterferenzen bekannt sind. Diese Interferenzen verzerren die Sendesignale umso stärker, je größer die Übertragungsbandbreite des Übertragungskanal ist.

Herkömmlicherweise werden die Sendesignale an der Sendestaion ohne Berücksichtigung der wirksamen Funkkanäle generiert. Die dann auftretenden Interferenzerscheinungen werden in einem zweiten Schritt, zumindest näherungsweise, durch entsprechende angepasste und im allgemeinen sehr aufwendige Verfahren mittels Kanaschätzverfahren an den Empfangsstationen kompensiert.

Von besonderem Interesse sind nun Kanalschätzverfahren zum Schätzen der Übertragungsfunktionen $\underline{H}^{(k,k_a)}$ (f) eines linearen zeitinvarianten oder langsam zeitvarianten Kanals mit einem oder mehreren Eingängen k, mit k=1 ... K und K einer natürlichen Zahl größer gleich 1, und einem oder mehreren Ausgängen $k_a$, mit $k_a$=1 ... $K_a$ und $K_a$ einer natürlichen Zahl größer gleich 1 in OFDM-Systemen. Solche Kanäle kommen beispielsweise in Funksystemen vor. Hier besteht der MIMO-Kanal (Multiple Input Multiple Output) aus Funkkanälen von jeder Sendeantenne zu jeder Empfangsantenne, wobei die Signale an den Empfangsantennen additiv überlagert werden. Zusätzlich kann den Ausgangssignalen des MIMO-Kanals eine Störung additiv überlagert sein. Dieses allgemeine Modell beinhaltet Funksysteme

- mit einer oder mehreren Sendestationen,
- mit einer oder mehren Sendeantennen an jeder Sendestation,
- mit einer oder mehreren Empfangsstationen und
- mit einer oder mehren Empfangsantennen an jeder Empfangsstation.

Die Fußpunkte der Sendeantennen sind die Eingänge und die Fußpunkte der Empfangsantennen sind die Ausgänge des MIMO-Kanals. Eventuell vorhandene Filter, Vertärker etc. in der sender- oder empfängerseitigen Signalverarbeitung kann man ebenfalls als Bestandteil des MIMO-Kanals ansehen.

Ziel ist es, möglichst genaue Kenntnis der Übertragungsfunktionen der Kanäle innerhalb der Systembandbreite von jedem Eingang zu jedem Ausgang zu erlangen. Hierzu werden in jeden Eingang ein oder mehrere Sinussignale endlicher Dauer, bekannter Frequenz und bekannter komplexer Amplitude eingespeist. Anhand des Signalgemischs an den Ausgängen des MIMO-Kanals sollen die Übertragungsfunktionen geschätzt werden.

Die herkömmliche Vorgehensweise läßt sich wie folgt charakterisieren:

1. Die Frequenzen der in einen Eingang eingespeisten Sinussignale werden so gewählt, daß der Kehrwert des Frequenzabstands benachbarter Sinussignale mindestens der zeitlichen Dauer der längsten Kanalimpulsantwort von diesem Eingang zu einem der Ausgänge entspricht. Dann ist das Abtasttheorem im Frequenzbereich erfüllt.

2. Der Kehrwert der Frequenzdifferenz zweier beliebiger am gleichen oder an verschiedenen Eingängen eingespeister zeitbegrenzter Sinussignale ist ein ganzzahliges Vielfaches der zeitlichen Dauer der Sinussignale. Die eingespeisten Sinussignale sind dann orthogonal.

3. Da die Orthogonalität der eingespeisten Sinussignale bei Übertragen über den linearen zeitinvarianten oder innerhalb der Sinussignaldauer nur vernachlässigbar zeitvarianten Kanal zu einem Ausgang aufgrund des in OFDM-Systemen verwendeten zyklischen Präfixes nicht verloren geht, kann man die von den einzelnen Sinussignalen herrührenden Sinusausgangssignale in den Ausgangssignalen des MIMO-Kanals durch Filterung oder Fourier-Transformation separieren.

4. Der Quotient aus komplexer Amplitude eines Sinusausgangssignals und komplexer Amplitude des zugehörigen eingespeisten Sinussignals entspricht dem Abtastwert der Übertragungsfunktion vom zugehörigen Eingang zum Ausgang des MIMO-Kanals bei der Frequenz des Sinussignals.

5. Werte einer Übertragungsfunktion bei Frequenzen, die zwischen den Frequenzen der in den jeweiligen Kanal eingespeisten Sinussignale liegen, erhält man durch Interpolation. Falls der gemäß 1. größtmögliche Frequenzabstand der eingespeisten Sinussignale gewählt wurde, muss man nach dem Abtasttheorem zur Interpolation die sinc-Funktion verwenden. Wurde der Frequenzabstand der eingespeisten Sinussignale kleiner gewählt, kann man diese Überabtastung zur Verbesserung der Schätzung der Übertragungsfunktion verwenden.

Aus 2. folgt, dass nur diskrete Frequenzen in einem festen Frequenzraster zur Verfügung stehen. Die in den MIMO-Kanal eingespeisten Sinussignale müssen disjunkte Frequenzen haben, insbesondere dürfen an zwei verschiedenen Eingängen nur Sinussignale disjunkter Frequenzen eingespeist werden.

Aus der EP 0 913 973 A2 ist ein Verfahren zur Synchronisation sowie Kanalschätzung in einem gemeinsamen Schritt bekannt. Dabei wird jedoch nur jeweils ein einziger Übertragungskanal betrachtet.

Aus der EP 0 829 988 A2 ist ein Verfahren zur Synchronisation bekannt, wobei bezüglich einer Kanalschätzung ergänzend beschrieben wird, dass zwischen aufeinanderfolgenden OFDM-Symbolen jeweils eine Schutzzeit vorgesehen ist, welche kürzer als die Symboldauer ist. Anhand empfangener Impulse bzw. bestimmter Anteile dieser Impulse wird dabei eine Länge der Impulsantwort berechnet. Ist diese Länge der Impulsantwort kürzer als die Länge der Schutzzeit, so wird anhand eines in einem vorherigen Schritt bestimmten Parameters solange eine neue Länge der Impulsantwort berechnet, bis sie länger als die Länge der Schutzzeit ist. Erst dann führt der Empfänger weitere Schritte durch.

Der Erfindung liegt daher die Aufgabe zugrunde, ein Verfahren sowie ein Kommunikationssystem zu verwirklichen, bei dem bei Einsatz eines MIMO-Vielkanalsystems für alle Ausgänge und für alle Trägerfrequenzen die Werte der Transferfunktion schätzbar sind.

Diese Aufgabe wird durch ein Verfahren mit den Merkmalen des Patentanspruchs 1 sowie durch ein Kommunikationssystem mit den Merkmalen des Patentanspruchs 11 gelöst. Ausgestaltungen und Weiterbildungen der Erfindung sind Gegenstand abhängiger Patentansprüche.

Erfindungsgemäß werden zur Schätzung der Kanaleigenschaften in einem Kommunikationssystem innerhalb seiner Systembandbreite, wobei das Kommunikationssystem mindestens zwei Übertragungskanäle zwischen mindestens zwei Eingängen k, mit k=1 ... K und K einer natürlichen Zahl größer gleich 2, und mindestens zwei Ausgängen $k_a$, mit $k_a$=1 ... $K_a$ und $K_a$ einer natürlichen Zahl größer gleich 2, umfasst, wobei die mindestens zwei Übertragungskanäle durch geschätzte Übertragungsfunktionen $\hat{\underline{H}}^{(k,k_a)}(f)$ charakterisiert werden, die zeitliche Dauer W der zur jeweiligen Übertragungsfunktion $\underline{H}^{(k,k_a)}(f)$ korrespondierenden empfangsseitig geschätzten Kanalimpulsantwort $\underline{h}^{(k,k_a)}(t)$ kürzer als die zeitliche Dauer eines jeweils über die Übertragungskanäle zu übertragenden Symbols gewählt, und die Übertragungsfunktionen $\underline{H}^{(k,k_a)}(f)$ aus einem einzigen Empfangssignal der übertragenen Symbole geschätzt.

Ohne diese Bedingung scheint eine Kanalschätzung in einem Mehrteilnehmerfeld mit K>1 unmöglich, da eine Schätzung der Werte mehrerer Übertragungsfunktionen $\hat{\underline{H}}^{(k,k_a)}(f)$, k=1 ... K, aus einer einzigen empfangenen komplexen Amplitude auf jedem Unterträger $f_n$ erforderlich ist. Ist jedoch die zeitliche Dauer der zur Übertragungsfunktion $\hat{\underline{H}}^{(k,k_a)}(f)$ korrespondierenden Kanalimpulsantwort $\underline{h}^{(k,k_a)}(t)$ kürzer als die effektive zeitliche Dauer eines über den Übertragungskanal zu übertragenden Symbols, so sind die Werte einer einzelnen Übertragungsfunktion $\hat{\underline{H}}^{(k,k_a)}(f)$ auf verschiedenen Unterträgern nicht völlig unabhängig. Dies ist die Grundlage für eine gemeinschaftliche Schätzung der Werte mehrerer Übertragungsfunktionen $\hat{\underline{H}}^{(k,k_a)}(f)$, k=1 ... K, aus einer einzigen empfangenen komplexen Amplitude.

In Weiterbildung der Erfindung werden zur Kanalschätzung Testsignale bei mindestens einer Trägerfrequenz verwendet, wobei Testsignale auch identische Trägerfrequenzen verwenden können.

Aus der Bedingung aus Anspruch 1 lässt sich, wie im Folgenden gezeigt wird, ableiten, dass

- die Verteilung der zur Verfügung stehenden Frequenzen auf die Eingänge nicht wie im Falle zwingend disjunkter Frequenzen koordiniert werden muss,
- eine höhere Frequenzdiversität der Kanalschätzung erreicht wird,
- eine höhere Interfererdiversität der Kanalschätzung erreicht wird und
- die im Falle des Verwendens weniger disjunkter Frequenzen an einem Eingang hohe Empfindlichkeit der Kanalschätzung einzelner Kanäle gegenüber schmalbandiger Störsignale, deren Frequenz zufällig der Frequenz einer der genutzten Sinussignale entspricht, reduziert wird.

In Weiterbildung der Erfindung sind die einzelnen Übertragungskanäle jeweils unkorreliert.

Da die verschiedenen Übertragungskanäle völlig unkorreliert sind, kann die Kanalschätzung unabhängig in allen Empfangsstationen durchgeführt werden. Die MIMO-Kanalschätzaufgabe entspricht somit mehreren parallelen MISO-(Multiple Input Single Output-) Kanalschätzaufgaben, wenn man aus dem Ausgangssignal jedes Ausgangs jeweils die Übertragungsfunktionen von allen Eingängen zu diesem Ausgang schätzt.

Mit Vorteil werden zur Kanalschätzung mit Pilotsymbolen $P^{(k)}$ moduliert Testsignale verwendet, wobei die Testsignale im Empfänger bekannt sind. Insbesondere kann jeweils nur ein übertragenes Pilotsymbol $P^{(k)}$ pro Übertragungskanal zur Kanalschätzung verwendet wird.

Durch die Verwendung von einem Pilotsymbol pro Übertragungskanal ist es möglich, anhand dieses einzigen Symbols die Werte der Übertragungsfunktion für alle Unterträger zu schätzen. Insbesondere ist es nicht nötig, dass die Sendestationen unterschiedliche Trägerfrequenzen benutzen. Aber auch dieser Spezialfall ist durch dieses Konzept abgedeckt, wenn die Pilotsymbole von ungenutzten Unterträgern zu Null gesetzt werden.

Mit Vorteil werden als Testsignale modulierte Sinussignale verwendet. Im diesem Fall der Sinussignale ergibt sich die Übertragungsfunktion in einfacher Weise aus dem Quotienten der komplexen Amplituden des Empfangssignals und des Sendesignals.

In Weiterbildung der Erfindung wird die geschätzte Übertragungsfunktion $\hat{\underline{H}}^{(k,k_a)}(f)$ durch das Produkt

$$\hat{\underline{H}}^{(k,k_a)}(f) = \underline{M} \cdot \underline{e}_P^{(k_a)}$$ aus einer Schätzmatrix $\underline{M}$ und aus dem Empfangssignal $\underline{e}_P^{(k_a)}$ bestimmt, wobei die Schätzmatrix

unabhängig vom Ausgang $k_a$ ist. Insbesondere ist die Schätzmatrix durch

$$\underline{M} = \begin{pmatrix} \underline{F}_W & & 0 \\ & \ddots & \\ 0 & & \underline{F}_W \end{pmatrix} \cdot \left( \underline{P} \cdot \begin{pmatrix} \underline{F}_W & & 0 \\ & \ddots & \\ 0 & & \underline{F}_W \end{pmatrix} \right)^{-1}$$ gegeben, wobei $\underline{F}_W$ die Fouriermatrix und $\underline{P} = (\underline{P}^{(1)} ... \underline{P}^{(k)})$ die, aus

den einzelnen Pilotmatrizen $\underline{P}^{(k)}$ zusammengesetzte gesamte Pilotmatrix ist.

Die Schätzmatrix $\underline{M}$ ist in der Bestimmung eine rechenintensive Matrix, die aber für eine a priori bekannte Pilotmatrix $\underline{P}$ nur einmal berechnet werden muss. Wie aus der Matrix $\underline{M}$ außerdem ersichtlich ist, hängt sie nicht von den einzelnen Ausgängen der Übertragungskanäle ab und kann somit identisch in jeder Empfangsstation verwendet werden.

Einzelheiten und Details der Erfindung werden nachfolgend anhand eines Anwendungsbeispiels für ein OFDM-FunkKommunikationssystem näher erläutert.

Hierbei zeigen:

Fig. 1: Die grundsätzliche Architektur eines Netzwerkes, welches Access Points (AP), Mobile Terminals (MT) und eine Control Unit (CU) umfasst, wobei die Kontroll Einheit (CU) in der Aufwärtsverbindung Joint Detection (JD) durchführt,

Fig. 2: Die grundsätzliche Architektur eines Netzwerkes, welches Access Points (AP), Mobile Terminals (MT) und eine Control Unit (CU) umfasst, wobei die Kontroll Einheit (CU) in der Abwärtsverbindung Joint Transmission (JT) durchführt.

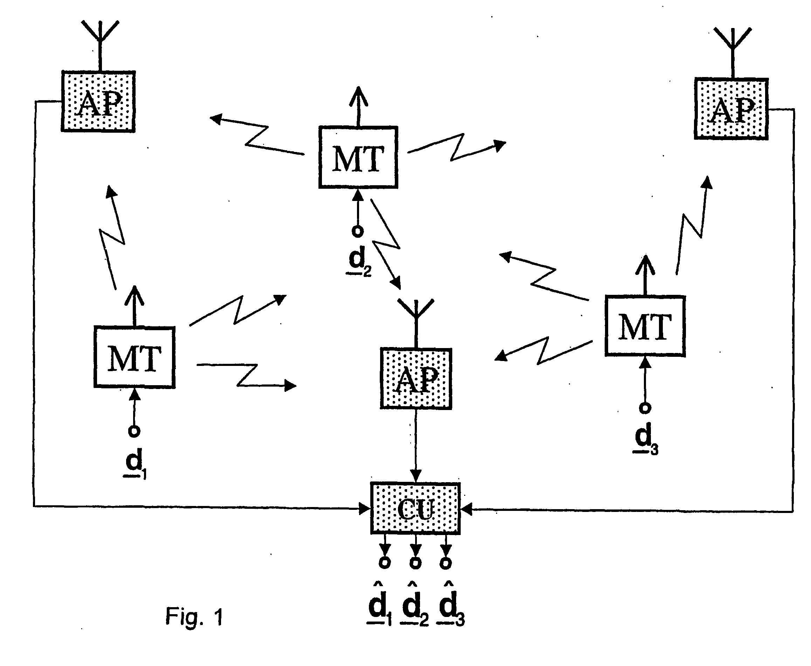

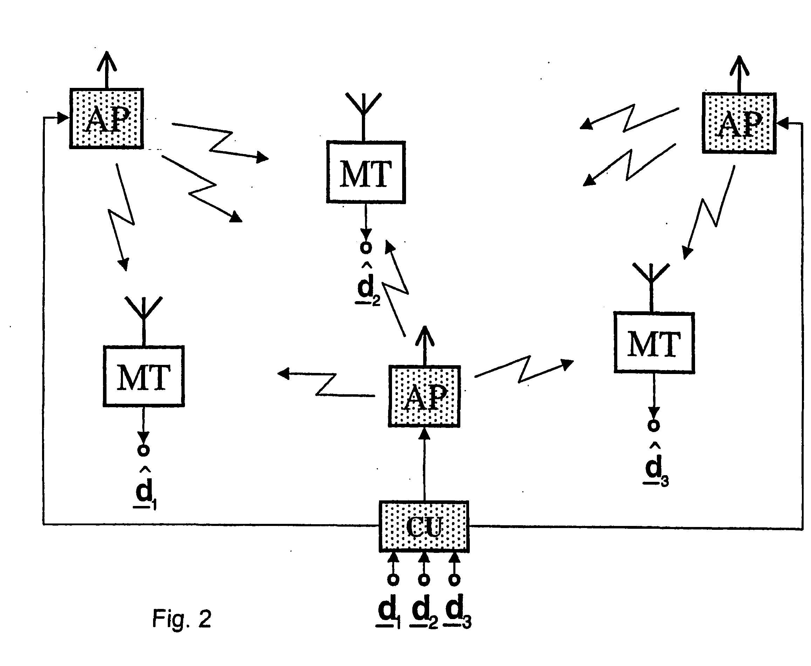

Eine Vorbedingung für die Anwendung von Interferenz-Reduktions-Techniken in der Aufwärtsrichtung von OFDM basierten Mobilfunksystemen ist die Kenntnis der Übertragungsfunktionen $\underline{H}^{(k,k_a)}(f)$, $k = 1...K$, $k_a = 1...K_a$, aller Funkkanäle von den $K$ MTs zu den $K_a$ Aps (Fig. 1 und 2). Diese Kenntnis der Übertragungsfunktionen $\underline{H}^{(k,k_a)}(f)$ wird durch eine Kanalschätzung gewonnen. Da die verschiedenen Funkkanäle völlig unkorreliert sind, kann die Kanalschätzung getrennt an allen APs durchgeführt werden. Dabei ist eine Betrachtung des Problems der Schätzung der Übertragungsfunktionen $\underline{H}^{(k,k_a)}(f)$, $k=1...K$, an einem einzigen spezifischen AP $k_a$ ausreichend. Lediglich ein einziges empfangenes OFDM-Symbol an dem AP $k_a$, das aus den von $K$ MTs gleichzeitig ausgesendeten $K$ OFDM-Symbolen resultiert, soll für die Schätzung der Übertragungsfunktionen $\underline{H}^{(k,k_a)}(f)$, $k=1...K$ benötigt werden. Die Basisidee der Kanalschätzung beruht auf einer Aussendung von OFDM-Symbolen, in denen die komplexen Amplituden aller Sinuskurven dem AP $k_a$ bekannte Pilotsymbole sind. Im rauschfreien Fall hängen nun die komplexen Amplituden der am AP $k_a$ empfangenen Sinuskurven lediglich von den Werten der Übertragungsfunktionen $\underline{H}^{(k,k_a)}(f_n)$, $k=1...K$, der korrespondierenden Unterträgerfrequenzen $f_n$ ab. Im folgenden wird die Anzahl Unterträger pro OFDM-Symbol mit $N$ bezeichnet. Daraus folgt, daß die Länge eines OFDM-Symbols ohne zyklischem Präfix in der Zeitebene gleich $N$ sein wird. Auf den ersten Blick scheint eine Kanalschätzung in einem Mehrteilnehmerumfeld $K > 1$ als unmöglich, da eine Schätzung der Werte mehrerer Übertragungsfunktionen $\underline{H}^{(k,k_a)}(f_n)$, $k=1...K$, aus einer einzigen empfangenen komplexen Amplitude auf jedem Unterträger $f_n$ erforderlich ist. Erfindungsgemäß sind jedoch die Werte einer einzelnen Übertragungsfunktion $\underline{H}^{(k,k_a)}(f_n)$ auf verschiedenen Unterträgern $f_n$ nicht völlig unabhängig, wenn die Länge $W$ der Kanalimpulsantwort $\underline{h}^{(k,k_a)}$ in der Zeitebene kleiner als $N$ ist, was in typischen OFDM Systemen zufällig der Fall ist. Im folgenden wird eine Technik zur Kanalschätzung entwickelt, die diese Eigenschaft nutzt. Zu Beginn wird nur der spezielle Fall

$$N = KW \qquad\qquad (0.1)$$

betrachtet. Das Ziel ist eine Schätzung der Werte der übertragungsfunktionen $\underline{H}^{(k,k_a)}(f_n)$ aller APs $k=1...K$ auf allen Unterträgerfrequenzen $f_n$, $n = 1...N$. Die Schätzung wird mit $\underline{\hat{H}}^{(k,k_a)}(f_n)$ bezeichnet. Lediglich ein einziges OFDM-Symbol, in dem jedes MT $k$, $k=1...K$ bekannte Pilotsymbole $\underline{p}_{f_n}^{(k)}$ auf jedem Unterträger $f_n$, $n = 1...N$ sendet, wird hierfür benötigt. Insbesondere ist es nicht erforderlich, daß verschiedene MTs disjunkte Unterbereiche der Unterträger zur Übertragung ihrer Pilotsymbole $\underline{p}_{f_n}^{(k)}$ nutzen, aber auch dieser spezielle Fall ist in dem betrachteten allgemeinen Konzept enthalten, wenn die Pilotsymbole nicht verwendeter Unterträger zu Null gesetzt werden.

Übertragungsmodell

Der Vektor der komplexen Amplituden der empfangenen Sinuskurven an dem AP $k_a$ ist

$$\underline{e}_P^{(k_a)} = \left(\underline{e}_{P_{f_1}}^{(k_a)} \cdots \underline{e}_{P_{f_N}}^{(k_a)}\right)^T . \qquad\qquad (0.2)$$

Der Vektor der komplexen Amplituden der empfangenen Sinuskurven an dem AP $k_a$ resultiert aus der Überlagerung der Vektoren der komplexen Amplituden der empfangenen Sinuskurven

$$\underline{e}_P^{(k,k_a)} = \left(\underline{e}_{P_{f_1}}^{(k,k_a)} \cdots \underline{e}_{P_{f_N}}^{(k,k_a)}\right)^T , \quad k = 1...K , \qquad\qquad (0.3)$$

resultierend aus den übertragenen Piloten der MTs $k=1...K$ und einigem Rauschen $\underline{n}$:

$$\underline{e}_P^{(k_a)} = \sum_{k=1}^{K} \underline{e}_P^{(k,k_a)} + \underline{n} . \qquad\qquad (0.4)$$

mit der Pilotmatrix

$$\underline{\mathbf{P}}^{(k)} = \begin{pmatrix} \underline{p}_{f_1}^{(k)} & & 0 \\ & \ddots & \\ 0 & & \underline{p}_{f_N}^{(k)} \end{pmatrix} \qquad (0.5)$$

des MT $k$ und dem Vektor der Übertragungsfunktion

$$\underline{\mathbf{H}}^{(k,k_\mathrm{a})} = \left( H^{(k,k_\mathrm{a})}(f_1) \ldots H^{(k,k_\mathrm{a})}(f_N) \right)^{\mathrm{T}} \qquad (0.6)$$

des MK $k$ an dem AP $k_a$ ist der Vektor der komplexen Amplituden der empfangenen Sinuskurven an dem AP $k_a$ resultierend aus den ausgesendeten Piloten des MT $k$ gleich

$$\underline{\mathbf{e}}_{\mathrm{P}}^{(k,k_\mathrm{a})} = \underline{\mathbf{P}}^{(k)} \cdot \underline{\mathbf{H}}^{(k,k_\mathrm{a})} . \qquad (0.7)$$

Aus (0.4) und (0.7) folgt

$$\underline{\mathbf{e}}_{\mathrm{P}}^{(k_\mathrm{a})} = \sum_{k=1}^{K} \underline{\mathbf{P}}^{(k)} \underline{\mathbf{H}}^{(k,k_\mathrm{a})} + \underline{\mathbf{n}} . \qquad (0.8)$$

Mathematisch folgt die gegenseitige Abhängigkeit der Elemente des Vektors der Übertragungsfunktion aus (0.6) aus der Fourier-Transformation der korrespondierenden Kanalimpulsantwort des MT $k$ an dem AP $k_a$

$$\underline{\mathbf{h}}^{(k,k_\mathrm{a})} \overset{!}{=} \left( \underline{h}_1^{(k,k_\mathrm{a})} \ldots \underline{h}_W^{(k,k_\mathrm{a})} \right)^{\mathrm{T}} . \qquad (0.9)$$

Mit der $N \times N$ Fouriermatrix $\underline{\mathbf{F}}$ kann die Fourier-Transformation wie folgt geschrieben werden

$$\underline{\mathbf{H}}^{(k,k_\mathrm{a})} = \underline{\mathbf{F}} \cdot \begin{pmatrix} \underline{\mathbf{h}}^{(k,k_\mathrm{a})} \\ 0 \\ \vdots \\ 0 \end{pmatrix} , \qquad (0.10)$$

wobei die Kanalimpulsantwort $\mathbf{h}^{(k,k_a)}$ der *Länge W* gleich Null ist, ergänzt zu einer Länge von $N$ Abtastungen. Der Vektor der Übertragungsfunktion $\underline{\mathbf{H}}^{(k,k_a)}$ ist in dem $W$-dimensionalen Teilraum durch die ersten $W$ Spalten der Fouriermatrix definiert. Nun definieren wir die $N \times W$ Untermatrix $\underline{\mathbf{F}}_W$ der $N \times N$ Fouriermatrix $\underline{\mathbf{F}}$:

$$\left[ \underline{\mathbf{F}}_W \right]_{i,j} = \left[ \underline{\mathbf{F}} \right]_{i,j} , \quad i = 1 \ldots N , \quad j = 1 \ldots W . \qquad (0.11)$$

Aus (0.10) folgt mit (0.11)

$$\underline{\mathbf{H}}^{(k,k_{\mathrm{a}})} = \underline{\mathbf{F}}_{W} \cdot \underline{\mathbf{h}}^{(k,k_{\mathrm{a}})} .$$
(0.12)

Die totale Kanalimpulsantwort an dem AP $k_{\mathrm{a}}$ ist definiert als

$$\underline{\mathbf{h}}^{(k_{\mathrm{a}})} = \left( \underline{\mathbf{h}}^{(1,k_{\mathrm{a}})^{\mathrm{T}}} \cdots \underline{\mathbf{h}}^{(K,k_{\mathrm{a}})^{\mathrm{T}}} \right)^{\mathrm{T}} .$$
(0.13)

Entsprechend kann eine totale Übertragungsfunktion

$$\underline{\mathbf{H}}^{(k_{\mathrm{a}})} = \left( \underline{\mathbf{H}}^{(1,k_a)^{\mathrm{T}}} \cdots \underline{\mathbf{H}}^{(K,k_a)^{\mathrm{T}}} \right)^{\mathrm{T}} .$$
(0.14)

an dem AP $k_{\mathrm{a}}$ definiert werden. Aus (0.12) folgt mit (0.13) und (0.14)

$$\underline{\mathbf{H}}^{(k_{\mathrm{a}})} = \underbrace{\begin{pmatrix} \underline{\mathbf{F}}_{W} & & 0 \\ & \ddots & \\ 0 & & \underline{\mathbf{F}}_{W} \end{pmatrix}}_{KN \times KW = KN \times N \text{ blockdiagonal matrix}} \cdot \underline{\mathbf{h}}^{(k_{\mathrm{a}})} .$$
(0.15)

Mit der $N \times KN$ totalen Pilotmatrix

$$\underline{\mathbf{P}} = \left( \underline{\mathbf{P}}^{(1)} \cdots \underline{\mathbf{P}}^{(K)} \right)$$
(0.16)

und (0.15) folgt aus (0.8)

$$\underline{\mathbf{e}}_{\mathrm{P}}^{(k_{\mathrm{a}})} = \underline{\mathbf{P}} \cdot \underline{\mathbf{H}}^{(k_{\mathrm{a}})} + \underline{\mathbf{n}} = \underline{\mathbf{P}} \cdot \underbrace{\begin{pmatrix} \underline{\mathbf{F}}_{W} & & 0 \\ & \ddots & \\ 0 & & \underline{\mathbf{F}}_{W} \end{pmatrix}}_{\underline{\mathbf{G}}} \cdot \underline{\mathbf{h}}^{(k_{\mathrm{a}})} + \underline{\mathbf{n}} .$$
(0.17)

Die Systemmatrix $\underline{\mathbf{G}}$ ist eine $N \times KW = N \times N$ Matrix und im allgemeinen nicht-singulär, d.h. die inverse $\underline{\mathbf{G}}^{-1}$ existiert. Lediglich in sehr speziellen Fällen, beispielsweise wenn zwei MTs die gleiche Pilotmatrix $\underline{\mathbf{P}}^{(k)}$ nutzen, wird die System-matrix $\underline{\mathbf{G}}$ singulär.

Kanalschätzer

Die Größte-Wahrscheinlichkeits-Schätzung der totalen Kanalimpulsantwort an dem AP $k_{\mathrm{a}}$ ist

$$\hat{\underline{\mathbf{h}}}^{(k_{\mathrm{a}})} = \underline{\mathbf{G}}^{-1} \cdot \underline{\mathbf{e}}_{\mathrm{P}}^{(k_{\mathrm{a}})} .$$
(0.18)

In dem allgemeineren Fall

$$N \geq KW \qquad (0.19)$$

muß die Pseudoinverse $(\underline{\mathbf{G}}^{*T} \underline{\mathbf{G}})^{-1} \underline{\mathbf{G}}^{*T}$ für die Kanalschätzung anstelle der inversen $\underline{\mathbf{G}}^{-1}$ verwendet werden. Aus der Schätzung $\underline{\hat{\mathbf{h}}}^{(k_a)}$ der totalen Kanalimpulsantwort an dem AP $k_a$ erhalten wir eine Schätzung der totalen Übertragungsfunktion an dem AP $k_a$ durch eine blockweise Fouriertransformation:

$$\underline{\hat{\mathbf{H}}}^{(k_a)} = \begin{pmatrix} \underline{\mathbf{F}}_W & & 0 \\ & \ddots & \\ 0 & & \underline{\mathbf{F}}_W \end{pmatrix} \cdot \underline{\hat{\mathbf{h}}}^{(k_a)} . \qquad (0.20)$$

Aus (0.18) und (0.20) folgt die gewünschte Formel für die Berechnung der Schätzung der gesamten $NK$ Abtastungen der Übertragungsfunktionen $\underline{H}^{(k,k_a)}(f_n)$, $k=1...K$, auf allen Unterträgerfrequenzen $f_n$, $n = 1...N$, aus den komplexen Amplituden der lediglich $N$ empfangenen Sinuskurven an dem AP $k_a$ :

$$\underline{\hat{\mathbf{H}}}^{(k_a)} = \underbrace{\begin{pmatrix} \underline{\mathbf{F}}_W & & 0 \\ & \ddots & \\ 0 & & \underline{\mathbf{F}}_W \end{pmatrix} \cdot \left( \underline{\mathbf{P}} \cdot \begin{pmatrix} \underline{\mathbf{F}}_W & & 0 \\ & \ddots & \\ 0 & & \underline{\mathbf{F}}_W \end{pmatrix} \right)^{-1}}_{\underline{\mathbf{M}}} \cdot \underline{\mathbf{e}}_P^{(k_a)} . \qquad (0.21)$$

Die zeitraubende und eine Matrixinversion beinhaltende Berechnung der $KN \times N$ Schätzmatrix $\underline{\mathbf{M}}$ kann offline erfolgen, da die Schätzmatrix $\underline{\mathbf{M}}$ lediglich von der die a priori bekannten Pilotsymbole $\underline{p}_{f_n}^{(k)}$ beinhaltenden totalen Pilotmatrix $\underline{\mathbf{P}}$ abhängt. Naheliegenderweise wird die gleiche Schätzmatrix $\underline{\mathbf{M}}$ für alle APs $k_a = 1...K_a$ genutzt.

**Patentansprüche**

1. Verfahren zur Schätzung der Kanaleigenschaften in einem Kommunikationssystem innerhalb seiner Systembandbreite, wobei das Kommunikationssystem mindestens zwei Übertragungskanäle zwischen mindestens zwei Eingängen k, mit k=1 ... K und K einer natürlichen Zahl größer gleich 2, und mindestens zwei Ausgängen $k_a$, mit $k_a$=1 ... $K_a$ und $K_a$ einer natürlichen Zahl größer gleich 2, umfasst,
wobei die mindestens zwei Übertragungskanäle durch geschätzte Übertragungsfunktionen $\underline{\hat{H}}^{(k,k_a)}(f)$ charakterisiert werden,
**dadurch gekennzeichnet,**
**dass** die zeitliche Dauer W der zur jeweiligen Übertragungsfunktion $\underline{H}^{(k,k_a)}(f)$ korrespondierenden empfangsseitig geschätzten Kanalimpulsantwort $\underline{h}^{(k,k_a)}(t)$ kürzer als die zeitliche Dauer eines jeweils über die Übertragungskanäle zu übertragenden Symbols gewählt wird, und dass die Übertragungsfunktionen $\underline{H}^{(k,k_a)}(f)$ aus einem einzigen Empfangssignal der übertragenen Symbole geschätzt werden.

2. Verfahren nach Anspruch 1, **dadurch gekennzeichnet, dass** zur Kanalschätzung für jeden Übertragungskanal Testsignale mindestens einer Trägerfrequenz verwendet werden, wobei als Testsignale für unterschiedliche Übertragungskanäle identische Trägerfrequenzen verwendet werden.

3. Verfahren nach Anspruch 1, **dadurch gekennzeichnet, dass** zur Kanalschätzung für jeden Übertragungskanal Testsignale mindestens einer Trägerfrequenz verwendet werden, wobei als Testsignale für unterschiedliche Übertragungskanäle unterschiedliche Trägerfrequenzen verwendet werden.

4.  Verfahren nach einem der Ansprüche 1 bis 3, **dadurch gekennzeichnet, dass** als Übertragungskanäle jeweils unkorrelierte Übertragungskanäle verwendet werden.

5.  Verfahren nach einem der Ansprüche 1 bis 4, **dadurch gekennzeichnet, dass** zur Kanalschätzung mit zumindest einem Pilotsymbol $p^{(k)}$ modulierte Testsignale verwendet werden, wobei die Testsignale empfangsseitig bekannt sind.

6.  Verfahren nach Anspruch 5, **dadurch gekennzeichnet, dass** nur jeweils ein übertragenes Pilotsymbol $P^{(k)}$ pro Übertragungskanal zur Kanalschätzung verwendet wird.

7.  Verfahren nach Anspruch 5, **dadurch gekennzeichnet, dass** die Testsignale modulierte Sinussignale sind.

8.  Verfahren nach einem der Ansprüche 1 bis 7, **dadurch gekennzeichnet, dass** die geschätzte Übertragungsfunktion $\hat{\underline{H}}^{(k,k_a)}(f)$ durch das Produkt $\hat{\underline{H}}^{(k,k_a)}(f) = \underline{M} \cdot \underline{e}_P^{(k_a)}$ aus einer Schätzmatrix $\underline{M}$ und aus einem Empfangssignal $\underline{e}_P^{(k_a)}$ bestimmt wird, wobei die Schätzmatrix unabhängig vom Ausgang $k_a$ ist.

9.  Verfahren nach Anspruch 8, **dadurch gekennzeichnet, dass** die Schätzmatrix durch

$$\underline{M} = \begin{pmatrix} \underline{F}_W & & 0 \\ & \ddots & \\ 0 & & \underline{F}_W \end{pmatrix} \cdot \left( \underline{P} \cdot \begin{pmatrix} \underline{F}_W & & 0 \\ & \ddots & \\ 0 & & \underline{F}_W \end{pmatrix} \right)^{-1}$$ gegeben ist, wobei $\underline{F}_W$ die Fouriermatrix und $\underline{P} = (\underline{P}^{(1)}...$

    $\underline{P}^{(K)})$ eine, aus einzelnen Pilotmatrizen $\underline{P}^{(k)}$ zusammengesetzte, gesamte Pilotmatrix ist.

10. Verfahren nach einem der Ansprüche 1 bis 9, **dadurch gekennzeichnet, dass** das Kommunikationssystem ein Übertragungsverfahren nach dem OFDM Verfahren verwendet.

11. Kommunikationssystem mit zumindest einer Sendestation und zumindest einer Empfangsstation, wobei zwischen der zumindest einen Sendestation und der zumindest einen Empfangsstation mindestens zwei Übertragungskanäle zwischen mindestens zwei Eingängen k, mit k=1 ... K und K einer natürlichen Zahl größer gleich 2, und mindestens zwei Ausgängen $k_a$, mit $k_a$=1 ... $K_a$ und $K_a$ einer natürlichen Zahl größer gleich 2, bestehen, **dadurch gekennzeichnet, dass** die zumindest eine Sendestation Mittel aufweist zum Senden jeweils eines Symbols über die Übertragungskanäle, und die zumindest eine Empfangsstation Mittel aufweist zum Charakterisieren der mindestens zwei Übertragungskanäle durch geschätzte Übertragungsfunktionen $\underline{H}^{(k,k_a)}(f)$, wobei die Mittel der Empfangsstation ausgestaltet sind zum Wählen der zeitlichen Dauer W der zur jeweiligen Übertragungsfunktion $\underline{H}^{(k,k_a)}(f)$ korrespondie-renden empfangsseitig geschätzten Kanalimpulsantwort $\underline{h}^{(k,k_a)}(t)$ kürzer als die zeitliche Dauer des jeweils über die Übertragungskanäle zu übertragenden Symbols, und wobei die Mittel der Empfangsstation ausgestaltet sind zum Schätzen der Übertragungsfunktionen $\underline{H}^{(k,k_a)}(f)$ aus einem einzigen Empfangssignal der übertragenen Symbole.

**Claims**

1.  Method for estimating the channel properties in a communication system within its system bandwidth, wherein the communication system comprises at least two transmission channels between at least two inputs k, where k=1 ... K and K is a natural number greater than or equal to 2, and at least two outputs $k_a$, where $k_a$=1 ... $K_a$ and $K_a$ is a natural number greater than or equal to 2, the at least two transmission channels being **characterised by** means of estimated transmission functions $\hat{\underline{H}}^{(k,k_a)}(f)$,
    **characterised in that**
    the time duration W of the channel impulse response $\underline{h}^{(k,k_a)}(t)$ estimated on the receive side and corresponding to the respective transmission function $\underline{H}^{(k'k_a)}(f)$, is chosen to be shorter than the time duration of a symbol that is to be transmitted in each case over the transmission channels, and that the transmission functions $\underline{H}^{(k,k_a)}(f)$ are esti-mated from a single received signal of the transmitted symbols.

2.  Method according to claim 1, **characterised in that** test signals of at least one carrier frequency are used for the channel estimation for each transmission channel, with identical carrier frequencies being used as test signals for different transmission channels.

3. Method according to claim 1, **characterised in t h at** test signals of at least one carrier frequency are used for the channel estimation for each transmission channel, with different carrier frequencies being used as test signals for different transmission channels.

4. Method according to one of claims 1 to 3, **characterised in that** uncorrelated transmission channels are used in each case as the transmission channels.

5. Method according to one of claims 1 to 4, **characterised in that** test signals modulated by means of at least one pilot symbol $P^{(k)}$ are used for the channel estimation, the test signals being known on the receive side.

6. Method according to claim 5, **characterised in that** only one transmitted pilot symbol $P^{(k)}$ per transmission channel in each case is used for the channel estimation.

7. Method according to claim 5, **characterised in that** the test signals are modulated sinusoidal signals.

8. Method according to one of claims 1 to 7, **characterised in that** the estimated transmission function $\hat{\underline{H}}^{(k,k_a)}(f)$ is determined by the product

$$\hat{\underline{H}}^{(k,k_a)}(f) = \underline{M} \cdot \underline{e}_P^{k_a}$$ from an estimation matrix $\underline{M}$ and a received signal $\underline{e}_P^{k_a}$ , the estimation matrix being independent of the output $k_a$.

9. Method according to claim 8, **characterised in that** the estimation matrix is given by

$$\underline{M} = \begin{pmatrix} \underline{F}_W & \cdot & 0 \\ 0 & \cdot & \underline{F}_W \end{pmatrix} \cdot \left( \underline{P} \cdot \begin{pmatrix} \underline{F}_W & \cdot & 0 \\ 0 & \cdot & \underline{F}_W \end{pmatrix} \right)^{-1}$$ , where $\underline{F}_W$ is the Fourier matrix and $\underline{P} = (\underline{P}^{(1)} ... \underline{P}^{(k)})$ is a total pilot matrix composed of individual pilot matrices $\underline{P}^{(k)}$.

10. Method according to one of claims 1 to 9, **characterised in that** the communication system uses a transmission method conforming to the OFDM method.

11. Communication system having at least one transmitting station and at least one receiving station, wherein between the at least one transmitting station and the at least one receiving station at least two transmission channels exist between at least two inputs k, where k=1 ... K and K is a natural number greater than or equal to 2, and at least two outputs $k_a$, where $k_a$=1 ... $K_a$ and $K_a$ is a natural number greater than or equal to 2, **characterised in that** the at least one transmitting station has means for transmitting a symbol over the transmission channels in each case, and the at least one receiving station has means for characterising the at least two transmission channels by means of estimated transmission functions $\underline{H}^{(k,k_a)}(f)$, the means of the receiving station being embodied for choosing the time duration W of the channel impulse response $\underline{h}^{(k,k_a)}(t)$ estimated on the receive side and corresponding to the respective transmission function $\underline{H}^{(k,k_a)}(f)$ to be shorter than the time duration of the symbol that is to be transmitted over the transmission channels in each case, and the means of the receiving station being embodied for estimating the transmission functions $\underline{H}^{(k,k_a)}(f)$ from a single received signal of the transmitted symbols.

**Revendications**

1. Procédé pour estimer les caractéristiques de canal dans un système de communication au sein de sa bande passante,
ledit système de communication comprenant au moins deux canaux de transmission entre au moins deux entrées k, avec k=1...K et K un entier naturel supérieur ou égal à 2, et au moins deux sorties $k_a$, avec $k_a$=1...$K_a$ et $K_a$ un entier naturel supérieur ou égal à 2,
lesdits au moins deux canaux de transmission étant **caractérisés par** des fonctions de transmission estimées,

$$\hat{\underline{H}}^{(k,k_a)}(f)$$

**caractérisé en ce que**
l'on choisit la durée W de la réponse impulsionnelle $\underline{h}^{(k,k_a)}(t)$ estimée côté réception et correspondant à la fonction de transmission respective, $\underline{H}^{(k,k_a)}(f)$ plus courte que la durée d'un symbole devant être transmis à chaque fois via les canaux de transmission,
et **en ce que** l'on estime les fonctions de transmission $\underline{H}^{(k,k_a)}(f)$ à partir d'un seul signal de réception des symboles transmis.

**2.** Procédé selon la revendication 1, **caractérisé en ce que** l'on utilise pour l'estimation de canal, pour chaque canal de transmission, des signaux d'essai d'au moins une fréquence porteuse, en utilisant comme signaux d'essai pour des canaux de transmission différents, des fréquences porteuses identiques.

**3.** Procédé selon la revendication 1, **caractérisé en ce que** l'on utilise pour l'estimation de canal, pour chaque canal de transmission, des signaux d'essai d'au moins une fréquence porteuse, en utilisant comme signaux d'essai pour des canaux de transmission différents, des fréquences porteuses différentes.

**4.** Procédé selon l'une des revendications 1 à 3, **caractérisé en ce que** l'on utilise comme canaux de transmission à chaque fois des canaux de transmission non corrélés.

**5.** Procédé selon l'une des revendications 1 à 4, **caractérisé en ce que** l'on utilise pour l'estimation de canal des signaux d'essai modulés avec au moins un symbole pilote $p^{(k)}$, lesdits signaux d'essai étant connus côté réception.

**6.** Procédé selon la revendication 5, **caractérisé en ce que** l'on n'utilise à chaque fois qu'un symbole pilote transmis $p^{(k)}$ par canal de transmission pour l'estimation de canal.

**7.** Procédé selon la revendication 5, **caractérisé en ce que** les signaux d'essai sont des signaux sinusoïdaux modulés.

**8.** Procédé selon l'une des revendications 1 à 7, **caractérisé en ce que** l'on détermine la fonction de transmission

estimée $H^{(k,k_a)}(f)$ par le produit $\underline{\hat{H}}^{(k,k_a)}(f) = \underline{M} \cdot \underline{e}_P^{(k_a)}$ d'une matrice d'estimation $\underline{M}$ et d'un signal de réception

$\underline{e}_P^{(k_a)}$ , la matrice d'estimation étant indépendante de la sortie $k_a$.

**9.** Procédé selon la revendication 8, **caractérisé en ce que** la matrice d'estimation est donnée par

$$\underline{M} = \begin{pmatrix} \underline{F}_W & & 0 \\ & \ddots & \\ 0 & & \underline{F}_W \end{pmatrix} \underline{P} \left( \underline{P} \begin{pmatrix} \underline{F}_W & & 0 \\ & \ddots & \\ 0 & & \underline{F}_W \end{pmatrix} \right)^{-1}$$

$\underline{F}_W$ étant la matrice de Fourier et $\underline{P}=(\underline{P}^{(1)}...\underline{P}^{(K)})$ une matrice pilote globale composée de matrices pilotes individuelles $\underline{P}^{(k)}$.

**10.** Procédé selon l'une des revendications 1 à 9, **caractérisé en ce que** le système de communication utilise un procédé de transmission suivant le procédé OFDM.

**11.** Système de communication comprenant au moins une station émettrice et au moins une station réceptrice, entre ladite au moins une station émettrice et ladite au moins une station réceptrice existant au moins deux canaux de transmission entre au moins deux entrées k, avec k=1...K et K un entier naturel supérieur ou égal à 2, et au moins deux sorties $k_a$, avec $k_a$=1...$K_a$ et $K_a$ un entier naturel supérieur ou égal à 2, **caractérisé en ce que** ladite au moins une station émettrice présente des moyens pour envoyer à chaque fois un symbole via les canaux de transmission et ladite au moins une station réceptrice présente des moyens pour caractériser lesdits au moins deux canaux de transmission par des fonctions de transmission estimées $\underline{H}^{(k,k_a)}(f)$, lesdits moyens de la station réceptrice étant configurés pour choisir la durée W de la réponse impulsionnelle $\underline{h}^{(k,k_a)}(t)$ estimée côté réception et correspondant à la fonction de transmission respective $\underline{H}^{(k,k_a)}(f)$, plus courte que la durée d'un symbole devant être transmis à chaque fois via les canaux de transmission,
et lesdits moyens de la station réceptrice étant configurés pour estimer les fonctions de transmission $\underline{H}^{(k,k_a)}(f)$ à partir d'un seul signal de réception des symboles transmis.

Fig. 1

Fig. 2

EP 1 342 353 B1